# EUROPEAN PATENT SPECIFICATION

(11) **EP 1 170 171 B1**
(45) Date of publication and mention of the grant of the patent: **31.12.2008**
(21) Application number: 01115579.3
(22) Date of filing: 28.06.2001
(51) Int. Cl.: B60R 16/00, G01C 21/00, B60Q 1/48, B62D 15/02

(54) **Vehicle-parking assisting system**
System zur Einparkhilfe eines Fahrzeuges
Système d'assistance pour garer un véhicule

(30) Priority: 03.07.2000 JP 2000201315
(43) Date of publication of application: 09.01.2002
(73) Proprietor: Toyota Jidosha Kabushiki Kaisha, Toyota-shi, Aichi-ken, 471-8571 (JP)
(72) Inventor: Katsuno, Toshiyasu, c/o Toyota Jidosha K.K., Toyota-shi, Aichi-ken 471-8571 (JP); Kubota, Yuichi, c/o Toyota Jidosha K.K., Toyota-shi, Aichi-ken 471-8571 (JP); Okazaki, Osamu, c/o Toyota Jidosha K.K., Toyota-shi, Aichi-ken 471-8571 (JP); Kakinami, Toshiaki, c/o AISIN SEIKI KABUSHIKI KAISHA, Kariya-shi, Aichi-ken 448-8650 (JP); Tanaka, Yu, c/o AISIN SEIKI KABUSHIKI KAISHA, Kariya-shi, Aichi-ken 448-8650 (JP)
(74) Representative: TBK-Patent

(56) References cited:
- EP-A- 1 123 844
- DE-A- 3 813 083
- DE-A- 19 650 808
- FR-A- 2 785 383

## Description

### BACKGROUND OF THE INVENTION

### 1.Field of the Invention

The present invention relates in general to a vehicle-parking assisting system according to the preamble portion of claim 1, and more particularly to a system arranged to assist an operator of a vehicle upon parking of the vehicle in a desired parking area, by providing audio-visual information such as voice messages and displayed images, and effecting automatic control of a steering system of the vehicle, so that the vehicle can be easily guided into the desired parking area, even when the parking area is open on only one side thereof, for instance, when the parking area is located between two other vehicles already parked with a relatively short spacing therebetween.

### 2.Description of the Related Art

JP-A-64-65412 discloses an example of a known method of guiding a vehicle to a desired position. In this method, a path of movement of the vehicle from a present position to the desired position includes a circular arc of a first circle having a radius not smaller than the smallest turning radius of the vehicle, and a circular arc of a second circle which has a radius not smaller than the smallest turning radius and which is tangent to the first circle at a point from which the above-indicated circular arcs extend toward the present and desired positions. This known method permits easy guiding of the vehicle to the desired position.

Where the known method indicated above is practiced when the vehicle is parked into a parking area, with a comparatively long movement of the vehicle in its lateral direction during a comparatively short movement of the vehicle in its longitudinal direction, the longitudinal direction of the vehicle may vary by a relatively large angle in the horizontal plane. Namely, the longitudinal direction of the vehicle may become considerably different from a direction of extension of a straight line_ connecting the present position and the desired parking area (desired position to which the vehicle is guided), during the movement to the desired parking area or position. This difference may make the vehicle operator feel uneasy. In addition, the known method tends to suffer from an insufficient distance of movement of the vehicle in the lateral direction, resulting in a large amount of partial protrusion of the parked vehicle beyond the outer edge of the desired parking area, which disturbs passage of other vehicles alongside the parked vehicle.

A vehicle-parking assisting system having the features of the preamble portion of claim 1 is described in DE 38 13 083 A1. Further vehicle-parking assisting systems are known from FR 2 785 383; DE 196 50 808 A1 and EP 1 123 844 A1.

### SUMMARY OF THE INVENTION

The present invention was made in view of the related art described above. It is therefore an object of the present invention to provide a vehicle-parking assisting system which permits a reduced amount of change of the longitudinal direction of the vehicle in the horizontal plane, upon parking of a vehicle involving a comparatively large distance of movement in its lateral direction during a comparatively small distance of movement in its longitudinal direction. This object is solved with a vehicle -parking assisting system of claim 1. Advantageous modifications are depicted in claims 2 to 7.

A predetermined position explained below is determined by the characteristics of turning of the vehicle located at the parking position, irrespective of the initial position of the vehicle. The desired path of movement of first selected portion explained below of the vehicle from the initial position toward the parking position is determined such that the desired path of movement passes the predetermined position at which the steering direction of the steerable wheel of the vehicle is reversed during a movement of the vehicle from the initial position to the parking position. The vehicle-parking assisting system according to the invention permits a smaller amount of change of the longitudinal direction of the vehicle in the horizontal plane, even when the parking involves a comparatively large distance of lateral movement of the vehicle between the initial and parking positions, as compared with an assisting system wherein the changeover point at which the steering direction is reversed is determined by the initial position from which the vehicle is moved for parking.

In the claims, the term "assisting an operator of a vehicle upon parking of the vehicle into a desired parking area" is interpreted to mean (i) assisting the vehicle operator in manipulating the steering wheel of the vehicle, by providing audio-visual information regarding the desired path of movement of the vehicle to the parking position, such as a displayed image of the desired path and/or a voice message, or alternatively (ii) assisting the vehicle operator by effecting an automatic control of the steering system of the vehicle so that the vehicle is moved along the desired path from the initial position to the parking position. Further a semi-automatic alternative or option (i) and (ii) is an automatic support control of the steering system which provides haptic information to the vehicle operator by supporting/obstructing the movement of the steering wheel in the correct/incorrect direction such that the vehicle operator must then only follow the easier moving direction of the wheel.

The predetermined position indicated above may be determined on the basis of the arcuate path of movement of the first selected portion of the vehicle that is to be taken when the vehicle is moved from the parking position with the smallest turning radius, and the straight line which passes the second selected portion of the vehicle at the parking position. Alternatively, the predetermined position may be determined on the basis of a reference position defined relative to the vehicle body, which reference position is determined on the basis of the arcuate path of movement of the first selected portion that is to be taken when the vehicle is turned with the smallest turning radius, and the straight line passing a second selected portion explained below of the vehicle. In this latter case, the reference position which is defined relative to the vehicle body and which does not lie on the desired path of movement of the first selected portion of the vehicle is converted into the predetermined position lying on the desired path of movement of the first selected portion.

In the claims and the illustrated first and second embodiments which will be described in detail, the axially intermediate point A of an axle connected to two wheels is equivalent to the above first selected portion of the vehicle.

Further, the position of a left wheel or a right wheel is equivalent to the above second selected portion of the vehicle. The point of tangency C1 is equivalent to the above predetermined position and the changeover point which are recited in the claims.

In the present invention, the predetermined position which serves as the changeover point at which the steering direction of the vehicle is reversed is determined on the basis of the characteristics of turning of the vehicle located at the parking position. The desired path of movement of the first selected portion of the vehicle from the initial position is terminated at the thus determined changeover point.

### BRIEF DESCRIPTION OF THE DRAWINGS

The above and other objects, features, advantages, and technical and industrial significance of this invention will be better understood by reading the following detailed description of exemplary embodiments of the invention, when considered in connection with the accompanying drawings, in which:
Fig. 1 is a block diagram illustrating a vehicle-parking assisting system constructed according to a first embodiment of this invention;
Fig. 2 is a view for explaining a method of determining a path of movement of an automotive vehicle to a parking area in the first embodiment;
Fig. 3 is a flow chart illustrating one example of a control routine executed in the first embodiment, to control a display device, for displaying the path of movement of the vehicle to the parking area;
Fig. 4 is a flow chart illustrating one example of a control routine executed to obtain and store a reference point with respect to the vehicle body, according to a second embodiment of the present invention; and
Fig. 5 is a flow chart illustrating an example of a control routine executed in the second embodiment, to control the display device, for displaying the path of movement of the vehicle to the parking area.

### DETAILED DESCRIPTION OF THE PREFERRED EMBODIMENTS

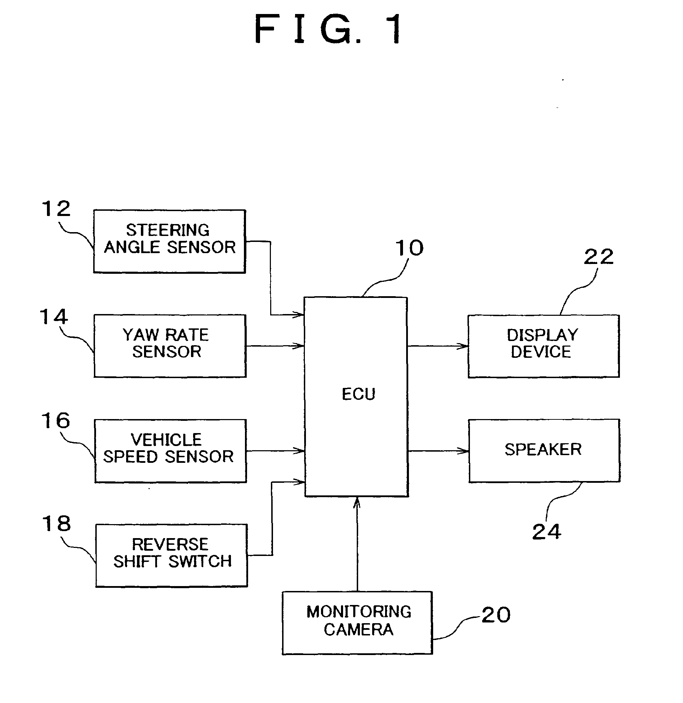

Referring first to Fig. 1, there is shown a vehicle-parking assisting system constructed according to the first embodiment of this invention, for assisting an operator of an automotive vehicle upon parking of the vehicle in a desired parking area, which involves a comparatively large distance of lateral movement of the vehicle during a comparatively short distance of longitudinal movement of the vehicle from the present position.

The present vehicle-parking assisting system apparatus includes an electronic control unit (hereinafter abbreviated as "ECU") 10, which controls a display 22 and a sound generating device in the form of a speaker 24. These devices 22, 24 are provided to assist the vehicle operator when the vehicle is moved backwards, as described below.

The present vehicle-parking assisting system further includes a steering angle sensor 12, a yaw rate sensor 14 and a vehicle speed sensor 16, which are connected to the ECU 10. The steering angle sensor 12 generates an output signal representative of a steering angle θ of a steering wheel operable by the vehicle operator. The yaw rate sensor 14 generates an output signal representative of a angular velocity about the gravity center of the vehicle, namely, a yaw rate ω of the vehicle. The vehicle speed sensor 16 generates a pulse signal the period of which represents a running speed SPD of the vehicle.

The output signals of the steering angle sensor 12, yaw rate sensor 14 and vehicle speed sensor 16 are fed to the ECU 10. The ECU 10 calculates the steering angle θ on the basis of the output signal of the steering angle sensor 12, and calculates the yaw rate ω about the gravity center of the vehicle on the basis of the output signal of the yaw rate sensor 14. The ECU 10 further calculates the vehicle running speed SPD of the vehicle on the basis of the output signal of the vehicle speed sensor 16. On the basis of the thus calculated steering angle θ, yaw rate wand vehicle running speed SPD, the ECU 10 estimates an actual turning radius R of the vehicle.

To the ECU 10, there is also connected a REVERSE SHIFT switch 18, which is placed in its ON state when a manually operable shift lever for a transmission is placed in a REVERSE position, and is placed in its OFF state when the shift lever is placed in any one of the other operating positions. On the basis of the output signal of the REVERSE SHIFT switch 18, the ECU 10 determines whether the vehicle is being moved backwards.

To the ECU 10, there are also connected a monitoring camera 20 disposed at a central part of a rear portion of the vehicle, and the above-indicated display device 22 and speaker 24. The display device 22 is disposed within an operator's compartment of the vehicle. The monitoring camera 20 is arranged to take a rear view, which is a view as seen from the vehicle in the backward direction. Visual information in the form of image data representative of the rear view are fed from the monitoring camera 20 to the ECU 10. When the ECU 10 determines that the vehicle is being moved backwards, the ECU 10 commands the monitoring display 22 to display the rear view represented by image data received from the monitoring camera 20.

The ECU 10 commands the speaker 24 to provide audio information in the form of voice messages, when a desired path of initial backward movement of the vehicle determined as described below is superimposed on the rear view displayed on a display screen of the display device 22, under the control of the ECU 10, during an initial portion of the backward movement of the vehicle to the desired parking area.

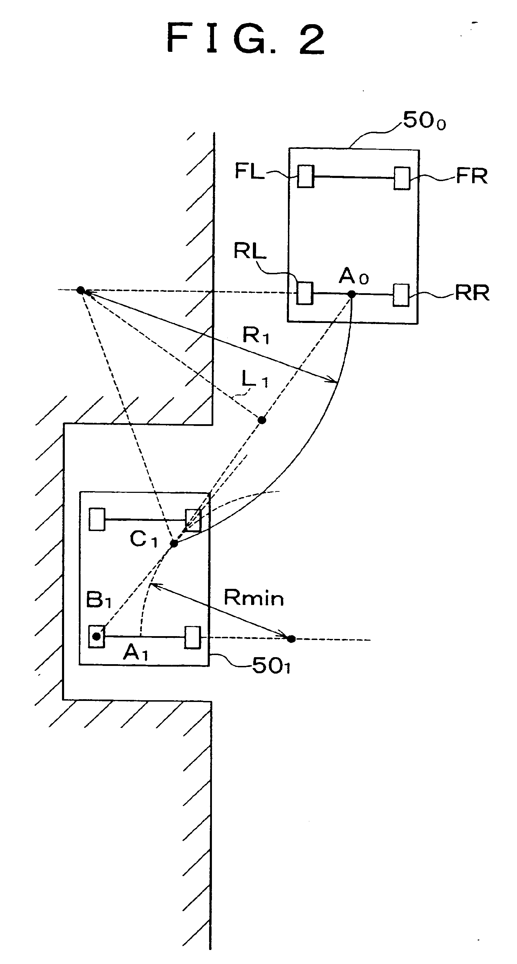

Referring next to Fig. 2, there will be described a method of determining the desired path of initial backward movement of the vehicle 50 toward the desired parking area, that is, the desired path along which the vehicle 50 is initially moved backwards for parking in the desired parking area which is open on only one side (on the right side as seen in Fig. 2) and which has a relatively short dimension as measured in the longitudinal direction of the vehicle 50 as parked therein. In Fig. 2, "50₀" denotes the vehicle 50 located at a position (hereinafter referred to as "initial position") at which the backward movement (turning) of the vehicle 50 for parking is initiated, while "50₁" denotes the vehicle 50 located at a position (hereinafter referred to as "parking position") at which the backward movement of the vehicle 50 for parking is terminated or completed. The backward movement of the vehicle 50 for parking into the parking area located rearwards and leftwards of the vehicle 50 as shown in Fig. 2 requires initial turning of the steering wheel in the counterclockwise direction, while the backward movement of the vehicle 50 for parking into the parking area located rearwards and rightwards of the vehicle 50 requires initial turning of the steering wheel in the clockwise direction. However, the desired paths of initial backward movements of the vehicle 50 for parking into rear left or right parking areas can be determined in substantially the same manner. In this respect, there will be described the method of determining the desired path of initial backward movement of the vehicle 50 for parking into the rear left parking area, by way of example.

In the present embodiment, the vehicle 50 has steerable front left and right wheels FL, FR whose steering angle can be changed by the steering wheel, and non-steerable rear left and right wheels RL, RR. In Fig. 2, "A" denotes an axially intermediate point (hereinafter referred to as "rear-axle intermediate point") of a rear axle operatively connected to the rear wheels RL, RR, and "A₀" denotes a position of the rear-axle intermediate point A of the vehicle 50₀, that is, when the vehicle 50 is located at the initial position. Further, "A₁" denotes a position of the rear-axle intermediate point A of the vehicle 50₁, that is, when the vehicle 50 is located at the parking position, and "B₁" denotes a position of one of the rear wheels RL, RR at the parking position of the vehicle 50, which one rear wheel is located on the side corresponding to the side on which the parking area is not open. In the specific example of Fig. 2, "B₁" denotes the position of the rear left wheel RL.

In Fig. 2, a path of movement of the rear-axle intermediate point A when the vehicle 50 is slowly moved forward from the parking position with the maximum angle of steering of the steerable front wheels FL, FR in the right direction is indicated by a broken line. Namely, this circular arc path originating from the position A₁ has the smallest turning radius Rₘᵢₙ of the vehicle 50, as also indicated in Fig. 2. A straight line (also indicated by a broken line) passing the position B₁ of the rear left wheel RL at the parking position is tangent to the above-indicated arcuate path of movement of the rear-axle intermediate point A, at a point C₁ (point of tangency C₁) which is located near the front right wheel FR at the parking position of the vehicle 50. In this example, the rear wheel RL having the position B₁ is located on the side of the vehicle 50 opposite to the side to which the vehicle 50 is turned (rightwards) along the above-indicated arcuate path having the radius Rₘᵢₙ, with the maximum angle of steering of the front wheels FL, FR in the right direction. On the other hand, the front wheel FR located near the point of_ tangency C1 is located on the side of the vehicle 50 to which the vehicle is turned along the above-indicated arcuate path having the radius Rₘᵢₙ. In the present embodiment, the desired path of initial backward movement of the rear-axle intermediate point A from the position A₀ to the position A₁ is determined to end at the point of tangency C₁, at which the steering direction of the steering wheel (front wheels FL, FR) is reversed, that is, changed from the clockwise direction to the counterclockwise direction during the backward movement of the vehicle 50 from the initial position to the parking position. The above-indicated desired path of initial movement of the rear-axle intermediate point A from the position A₀ to the point of tangency C₁ consists of an arcuate path C₁-A₀ of the point A which passes the point of tangency C₁ and the position A₀ of the point A at the initial position of the vehicle 50. The arcuate path C₁-A₀, which is indicated by a solid line in Fig. 2, has a radius R1 larger than a radius of an arcuate path (not shown) which is tangent to the above-indicated arcuate path having the smallest turning radius Rₘᵢₙ and which passes the position A₀ of the rear-axle intermediate point A at the initial position of the vehicle 50. The arcuate path having the radius is used in the conventional system, as described before.

In the present embodiment, the vehicle 50 is guided such that the rear-axle intermediate point A is initially moved along the above-indicated arcuate path A₀-C₁ having the relatively large radius R1, until the point A has reached the point of tangency C_{1;} that is, until the point A has reached a changeover or reversal point at which the steering direction is reversed or switched. The relatively large radius R1 is effective to reduce the amount of change of the longitudinal direction of the vehicle 50 in the horizontal plane in the initial portion of the backward movement of the vehicle 50 from the initial position toward the parking area. Thus, the use of the point of tangency C₁ as the changeover point of the steering direction of the vehicle 50 not only reduces the amount of change of the longitudinal direction of the vehicle 50 and accordingly the degree in which the vehicle operator feels uneasy with the change of the longitudinal direction of the vehicle 50, but also reduces the distance of partial protrusion of the parked vehicle 50₁ beyond the outer edge of the desired parking area.

The vehicle-parking assisting system according to the present embodiment of the invention is characterized by the ECU 10 arranged to determine the desired path of initial backward movement of the vehicle 50 (more specifically, the rear-axle intermediate point A) from the initial position toward the parking position, so that the determined desired path of initial backward movement is displayed on the display device 22. The present embodiment will be further explained.

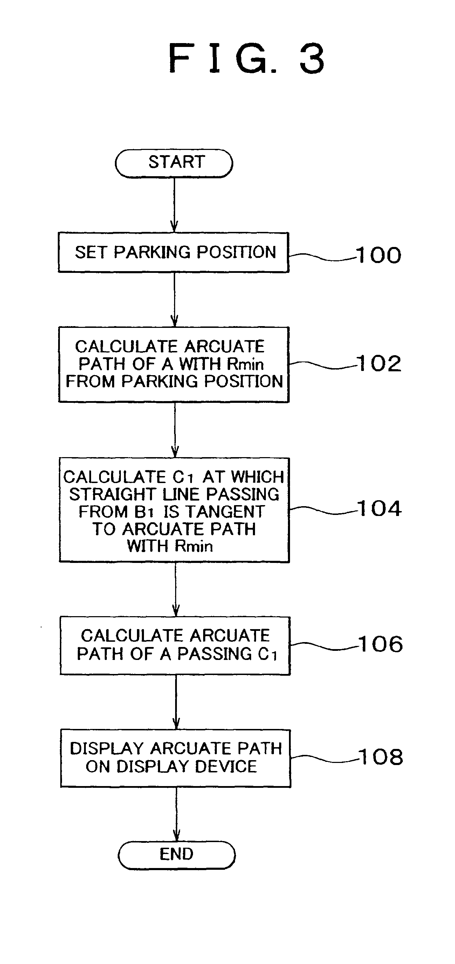

Referring to the flow chart of Fig. 3, there is illustrated one example of the control routine executed by the ECU 10 to determine the desired path of initial backward movement of the vehicle 50 upon parking of the vehicle in the desired parking area, and display the determined desired path on the display device 22. The control routine of Fig. 3 is executed each time a backward movement of the vehicle 50 for parking is detected. The control routine is initiated with step 100.

Step 100 is formulated to determine the parking position of the vehicle 50, more precisely, the desired position A₁ to which the rear-axle intermediate point A is moved when the vehicle 50 is moved backwards for parking into the desired parking area, under the operator's manipulation of the vehicle.

Step 100 is followed by step 102 to calculate the above-indicated arcuate path of the rear-axle intermediate point A which has the smallest vehicle turning radius Rₘᵢₙ and which is to be taken when the vehicle 50 is moved forward from the parking position (desired position A₁) with the maximum angle of steering of the steerable front wheels FL, FR in the right direction. The thus calculated arcuate path having the smallest turning radius Rₘᵢₙ is indicated by broken line in Fig. 2.

Then, the control flow goes to step 104 to calculate the point of tangency C₁ at which the straight line passing or extending from the position B₁ of the rear left wheel RL nearer to the side wall of the parking area is tangent to the arcuate path having the smallest turning radius Rₘᵢₙ, which has been calculated in step 102.

Step 104 is followed by step 106 to calculate the above-indicated arcuate path A₀-C₁ of the rear-axle intermediate point A which passes the point of tangency C₁ (calculated in step 104) and which is to be taken when the vehicle 50 is turned backwards from the initial position toward the parking area, in the initial portion of the backward movement of the vehicle 50 for parking in the parking area. Described in detail, the arcuate path A₀-C₁ which passes the position A₀ and the point of tangency C₁ is obtained as an arc of a circle having a center which is located at a point of intersection between a straight line of extension (indicated by broken line in Fig. 2) from the rear axle (having the axially intermediate point A₀) and a straight line L1(indicated by broken line) which is perpendicular to and devides a straight line connecting the point of tangency C₁ and the position A₀ of the rear-axle intermediate point A at the initial position by half. The arcuate path A₀-C₁ calculated in step 106 has the radius R1, as indicated in Fig. 2.

Step 108 is then implemented to display the arcuate path A₀-C₁ on the display device 22, as the desired path of movement of the rear-axle intermediate point A in an initial portion of the backward movement of the vehicle 50 from the initial position to the parking position. After the step 108 is initiated, the vehicle operator may utilize the visual information given on the display device 22, which assists the operator in manipulating the steering wheel for guiding the vehicle 50 into the parking area, along the desired path. The control routine of Fig. 3 is terminated with step 108.

As described above, the present vehicle-parking assisting system is arranged to determine the desired path of backward movement of a selected portion (rear-axle intermediate point A) of the vehicle 50, which path passes a predetermined position (point of tangency C₁) which is determined by characteristics of turning movement of the vehicle 50 from the parking position, more specifically, by the position A₁ of the point A at the parking position and the arcuate path of turning of the vehicle 50 from the parking position with the smallest turning radius Rₘᵢₙ. The assisting system is further arranged to control the display device 22 to display the thus determined desired path of backward movement of the selected portion of the vehicle 50. Accordingly, the vehicle operator observing the displayed desired path of backward movement can suitably manipulate the steering wheel so that the actual path of backward movement follows the desired path. Thus, the present assisting system effectively assists the vehicle operator in performing the steering operation of the vehicle 50 for suitably guiding the vehicle into the desired parking area, even where the backward movement of the vehicle into the parking area involves a relatively large distance of lateral movement of the vehicle during a relatively small distance of longitudinal movement of the vehicle.

When the rear-axle intermediate point A has been moved with the vehicle 50 along the desired path of initial backward movement, to a position near the point of tangency C₁, the ECU 10 commands the speaker 24 to generate a voice message informing the vehicle operator of this fact. When the point A has reached the point of tangency C₁, the ECU 10 commands the speaker 24 to generate another voice message informing the operator of this fact, so that the operator may stop the vehicle 50 at the point of tangency C₁, and then turn the steering wheel all the way in the reverse direction (in the clockwise direction in the example of Fig. 2), for maximum angle of steering of the front wheels FL, FR in the corresponding direction. In this state the subsequent backward movement of the vehicle 50 from the point of tangency C₁ is initiated so that the rear-axle intermediate point A is eventually moved to the position A₁ at the parking position, along the arcuate path C₁-A₁ which has the smallest turning radius Rₘᵢₙ. Although the present embodiment is arranged to display only the arcuate path A₀-C₁ as the desired path of initial backward movement of the point A, on the display device 22, as indicated by the solid line in Fig. 2, it will be understood that the desired path of the entire backward movement of the point A from the position A₀ to the position A₁ may be displayed, that is, both the arcuate path A₀-C₁ and the arcuate path C₁-A₁ may be displayed on the display device 22.

In the present embodiment described above, the point of tangency C₁ is used as the changeover point at which the steering direction of the steering wheel (the front wheels FL, FR) is reversed during the backward movement of the vehicle 50 into the parking area. As described above, this point of tangency C₁ is located near one of the two front wheels FL, FR which is on the side corresponding to the direction of turning of the vehicle 50 from the parking position along the above-indicated arcuate path A₁-C₁ having the smallest turning radius Rₘᵢₙ. In the specific example of Fig. 2, the point of tangency C₁ is located near the front right wheel FR located on the right side corresponding to the clockwise turning of the path A₁-C₁. With the point of tangency C₁ thus located, the radius R1 of the arcuate path A₀-C₁ which passes the position A0 of the point A at the initial position of the vehicle 50 and the point of tangency C₁ is larger than the conventional radius R2 of the arcuate path which passes the position A₀ and which is tangent to the above-indicated arcuate path A₁-C₁ which has the smallest turning radius Rₘᵢₙ. The radius R1 is considerably larger than the conventionally used radius R2 where the distance of movement of the vehicle 50 from the initial position (position A₀) to the parking position (position A₁) is relatively large.

When the vehicle 50 is turned from the initial position to the changeover point (point of tangency C₁) along an arcuate path having a comparatively large radius, a large amount of change of the longitudinal direction of the vehicle 50 can be prevented, that is, the amount of change of the longitudinal direction can be made relatively small. Accordingly, the present embodiment arranged to display the desired path of initial backward movement of the vehicle 50 on the display device 22 permits a reduced possibility that the vehicle operator feels uneasy with a relatively large amount of change of the longitudinal direction of the vehicle 50. Further, the present embodiment is effective to prevent a large distance of partial protrusion of the vehicle 50 beyond the outer side edge of the parking area. Thus, the present embodiment enables the vehicle operator to manipulate the steering wheel for parking the vehicle 50 in the desired parking area so that the parked vehicle does not disturb smooth passage of the other vehicles, while preventing the vehicle operator from feeling uneasy with a change of the longitudinal direction of the vehicle 50 during the initial portion of its backward movement.

The present embodiment, which permits the vehicle 50 to be initially moved backwards along an arcuate path having a comparatively large radius, has a further advantage that the friction between the wheels and the road surface is made smaller than in the conventional arrangement using the desired arcuate path having a comparatively small radius, with a result of a reduced assisting force required to operate the front wheels FL, FR and an accordingly improved fuel economy of the vehicle 50.

There will next be described a second embodiment of the present invention.

The first embodiment described above is adapted to calculate the arcuate path of the rear-axle intermediate point A from the position A₀, which is to be taken when the vehicle 50 is turned forward from the parking position with the smallest turning radius Rₘᵢₙ. The first embodiment is further adapted to calculate the point of tangency C₁ between the calculated arcuate path and the straight line passing the position B₁ of the rear left wheel RL. In the first embodiment, the point of tangency C₁ is used as the changeover point at which the steering direction is reversed.

On the other hand, the present second embodiment is adapted to first calculate an arcuate path of movement of the rear-axle intermediate point A of the vehicle body that is to be taken when the vehicle 50 is turned forward with the smallest turning radius. This arcuate path is calculated when the assisting apparatus is initially turned on. The second embodiment is further adapted to calculate a point C at which the straight line passing a predetermined one of the rear wheels is tangent to the calculated arcuate path. This point of tangency C is defined relative to the body of the vehicle, and is used as the changeover point at which the steering direction is reversed when the vehicle is turned backwards into the parking area. Namely, the point of tangency C located within the vehicle body when the vehicle 50 is at the parking position is set as the changeover point. The present second embodiment eliminates a need of calculating the arcuate path of the point A and the point of tangency C₁ which are located within the parking area, each time the vehicle 50 is moved backwards into the parking area. Accordingly, the present second embodiment makes it possible to reduce the load of the ECU 10 to determine the changeover point of the steering direction upon backward movements of the vehicle 50 into the parking area. Further, the time required to determine the changeover point can be reduced in the present embodiment.

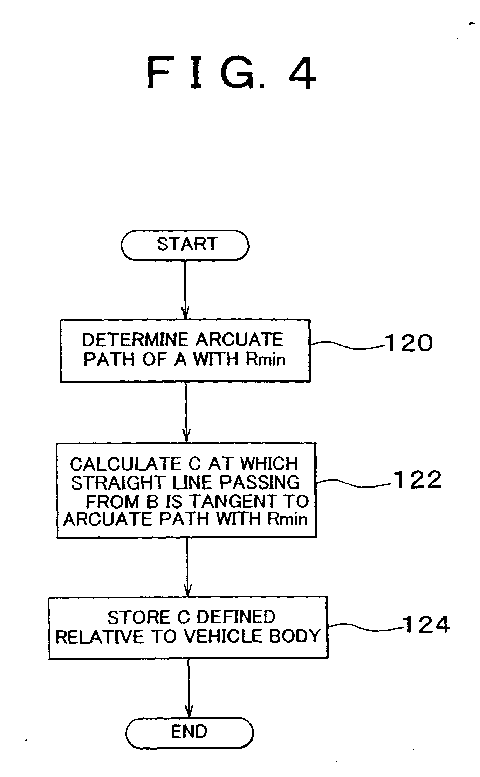

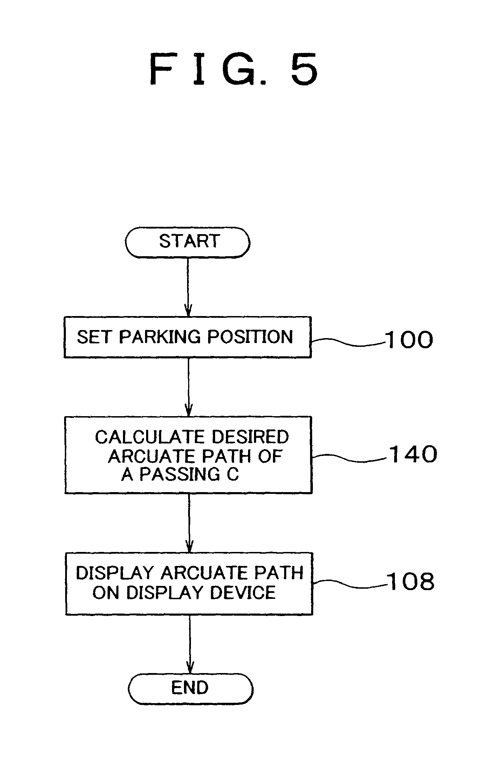

Referring to Figs. 4 and 5, the second embodiment will be described in detail.

The flow chart of Fig. 4 illustrates a control routine executed by the ECU 10 to determine and store the point of tangency C, when initial setting of the vehicle-parking assisting apparatus is effected. This control routine of Fig. 4 is initiated with step 120.

Step 120 is formulated to determine the arcuate path of the rear-axle intermediate point A that is to be taken when the vehicle 50 is turned forward with the maximum steering angle of the front wheels FL, FR.

Step 120 is followed by step 122 to calculate the point of tangency C at which the straight line passing or extending from the position B of one of the rear wheels RL, RR is tangent to the arcuate path having the smallest turning radius Rₘᵢₙ, which has been calculated in step 120. The rear wheel RL having the position B is located on the side of the vehicle 50 opposite to the side to which the vehicle 50 is turned along the above-indicated arcuate path having the radius Rₘᵢₙ, with the maximum angle of steering of the front wheels FL, FR.

Then, step 124 is implemented to store the point of tangency C (calculated in step 122) which is defined relative to the vehicle body.

In the second embodiment, the point of tangency C stored in the ECU 10 upon initial setting of the assisting apparatus is located within the vehicle body and is used as a reference point set on the vehicle body. This reference point or tangency point C is used as the changeover point C₁ of the steering direction when the vehicle 50 is moved backwards into the parking area.

Referring next to the flow chart of Fig. 5, there is shown an example of the control routine which is executed by the ECU 10 to determine the desired path of initial backward movement of the vehicle 50 from the initial position toward the parking position, and display the determined desired path on the display device 22. In Fig. 5, the same reference numerals as used in Fig. 3 are used to identify the same steps. In the control routine of Fig. 5, the first step 100 for determining the parking position is followed by step 140.

Step 140 is formulated to calculate a desired path of initial backward movement of the rear-axle intermediate point A when the vehicle 50 is initially moved backwards from the initial position toward the determined parking position. As in the first embodiment, this desired path of initial backward movement ends with the changeover point C₁ of the steering direction, which point C₁ is obtained on the basis of the point of tangency C stored in the memory. After step 140 is implemented to calculate the desired path of initial backward movement, step 108 is implemented or executed to display the calculated desired path of initial backward movement on the display device 22.

Like the first embodiment, the second embodiment is arranged to determine the desired path of initial backward movement of the selected portion of the vehicle body, such that the desired path passes a predetermined position (changeover point C₁ obtained from the stored point of tangency C) which is determined by the turning characteristics of the vehicle 50 at the parking position. The thus determined desired path of initial backward movement is displayed on the display device 22, for assisting the vehicle operator to suitably guide the vehicle 50 into the desired parking area, as in the first embodiment.

The second embodiment is characterized in that the ECU 10 operates, before initiation of backward movement of the vehicle 50 for parking in the parking area, to obtain the point of tangency C between the arcuate path to be taken by the rear-axle intermediate point A when the vehicle 50 is moved forwards with the smallest turning radius, and the straight line which passes one of the rear wheels. This point of tangency C defined relative to the vehicle body is used to determine the changeover point C₁ located within the parking area, when the vehicle 50 is actually moved backward into the parking area. Accordingly, the present second embodiment does not require to calculate the above-indicated arcuate path having the smallest turning radius and the point of tangency C, each time the vehicle 50 is moved backwards for parking in the parking area, so that the load of the ECU 10 to calculate the changeover point C₁ is reduced, with a result of reducing the time required to calculate the changeover point.

While the first and second embodiments which have been described are applied to the automotive vehicle 50 having the steerable front wheels FL, FR and the non-steerable rear wheels RL, RR, the principle of the present invention is equally applicable to an automotive vehicle having non-steerable front wheels FL, FR and steerable rear wheels RL, RR, and an automotive vehicle having four steerable wheels FL, FR, RL, RR.

The illustrated first and second embodiments are arranged display the calculated desired path of movement of the vehicle on the display device 22, for the purpose of assisting the vehicle operator in suitably manipulating the steering wheel so as to guide the vehicle into the desired parking area. However, the desired path of movement may be used to automatically control the steering system so as to guide the vehicle into the parking area, without the vehicle operator's manipulation of the steering wheel, or a haptic information by adequately supporting the turning of the steering wheel may be provided to the vehicle operator. In this case, too, the apparatus is considered to assist the vehicle operator in guiding the vehicle from the initial position to the parking position.

A vehicle-parking assisting system for parking a vehicle (50) in a desired parking area, with a comparatively long lateral movement of the vehicle from an initial position, but with a reduced amount of change of the longitudinal direction of the vehicle. The assisting system includes a control device operable to (a) calculate an arcuate path of movement of a first selected portion (A) of the vehicle that is to be taken when the vehicle is turned from the parking position with a smallest turning radius (Rₘᵢₙ), (b) calculate a point of tangency (C₁) between the calculated arcuate path of movement and a straight line passing a second selected portion (B₁) of the vehicle when the vehicle is located at the parking position, (c) determine a desired path of movement of the first selected portion from the initial position toward the parking position, which desired path passes the point of tangency, and (d) display the determined desired path of movement on a display device (22).

## Claims

1. A vehicle-parking assisting system for assisting an operator of a vehicle (50) upon parking of the vehicle in a desired parking area by a movement of the vehicle from an initial position, comprising:
movement-path determining means (10, 106, 140) operable to determine a desired path of movement of an axially intermediate point (A) of an axle connected to two wheels (RL, RR) of said vehicle from said initial position (A₀) toward said desired parking area, such that said desired path of movement passes a predetermined position (C₁) which is determined by characteristics of turning of said vehicle located at a parking position, and at which a steering direction of a steerable wheel (FL, FR) of the vehicle is reversed during a movement of said vehicle from said initial position to said parking position; and
arcuate-path calculating means (10, 102, 120) to calculate an arcuate path of movement (A₁-C₁) of the axially intermediate point (A) of an axle connected to the two wheels (RL, RR) of the vehicle that is to be taken when the vehicle (50) is turned with a smallest radius (Rₘᵢₙ) of turning of the vehicle; **characterized by** further comprising tangency-point calculating means (10, 104, 122) to calculate the predetermined position which is a point of tangency (C₁) between the accurate path of movement (A₁-C₁) of the axially intermediate point (A) of the axle connected the two wheels of the vehicle calculated by the arcuate-path calculating means and a straight line which passes a position (B, B₁) of one of the two wheels, wherein
the arcuate-path calculating means (10, 120) is operable upon initial setting of the vehicle-parking assisting system; and
the tangency-point calculating means (10, 122) is operable upon said initial setting, and calculates the point of tangency (C), such that said point of tangency is defined relative to said body of the vehicle.

2. The vehicle-parking assisting system according to claim 1, wherein
the arcuate-path calculating means (10, 102) is operable upon detection of a requirement for parking of the vehicle in said desired parking area, and calculates the arcuate path of movement (A₁-C₁) that is to be taken when the vehicle (50) is turned from said parking position;
the tangency-point calculating means (10, 104) is operable upon detection of said requirement; and
said movement-path determining means (10, 106) determines said desired path of movement (A₀-C₁) of the axially intermediate point (A) of an axle connected to two wheels (RL, RR) of said vehicle such that said desired path of movement passes said point of tangency (C1) as a changeover point at which said steering direction is reversed during said movement of the vehicle from said initial position to said parking position.

3. The vehicle-parking assisting system according to claim 1, wherein
said movement-path determining means (10, 140) is operable upon detection of a requirement for parking of the vehicle in said desired parking area, and on the basis of said point of tangency (C) calculated by said tangency-point calculating means, to obtain a changeover point (C) at which said steering direction is reversed on said path of movement of the vehicle from said initial position to said parking position, and said movement-path determining means determines said desired path of movement of the axially intermediate point (A) of an axle connected to two wheels (RL, RR) of said vehicle such that said desired path of movement passes said changeover point.

4. A vehicle-parking assisting system according to claims 1, 2 or 3, wherein
said axle is a rear axle connected to two rear wheels (RL, RR) of the vehicle, and said one of said two rear wheels is located on one side of the vehicle which is opposite to the other side which corresponds to a steering direction of front wheels (FL, FR) of the vehicle for turning of the vehicle with said smallest radius to obtain said arcuate path of movement of said first selected portion (A).

5. A vehicle-parking assisting system according to claim 1, wherein
said movement-path determining means (10, 106, 140) is operable to determine, as said desired path of initial movement of said first selected portion (A) of the vehicle from said initial position to said predetermined position (C₁), a circular arc passing said initial position (A₀) and said predetermined position (C₁), on the basis of a positional relationship between said initial position and said predetermined position.

6. A vehicle-parking assisting system according to claim 1, further comprising:
image obtaining means (20) disposed on a rear portion of the vehicle (50) and operable to obtain image data representative of a rear view taken from the vehicle in a backward direction; and
display means (22) operable to display said rear view and said desired path of movement of said axially intermediate point (A) of an axle connected to two wheels (RL, RR) of the vehicle determined by said movement-path determining means, such that said desired path of movement is superimposed on said rear view.

7. A vehicle-parking assisting system according to claim 1, further comprising:
sound generating means (24) operable when said axially intermediate point (A) of an axle connected to two wheels (RL, RR) of the vehicle (50) has moved to a position near said predetermined position during the movement of the vehicle from said initial position toward said parking position, said sound generating means generating an audible output for informing an operator of the vehicle that said axially intermediate point (A) of an axle connected to two wheels (RL, RR) of the vehicle (50) has moved to said position near said predetermined position.

## Patentansprüche

1. Fahrzeugeinparkassistenzsystem zum Unterstützen eines Fahrers eines Fahrzeugs (50) beim Einparken des Fahrzeugs aus einer Anfangsposition in einen gewünschten Einparkbereich durch eine Bewegung des Fahrzeugs, das Folgendes aufweist:
eine Bewegungsbahnbestimmungseinrichtung (10, 106, 140), die betriebfähig ist, um eine gewünschte Bewegungsbahn eines axialen Mittelpunkts (A) einer mit zwei Rädern (RL, RR) des Fahrzeugs verbundenen Achse aus der Anfangsposition (A₀) in Richtung des gewünschten Einparkbereichs zu bestimmen, so dass die gewünschte Bewegungsbahn eine vorbestimmte Position (C₁) durchläuft, die durch Drehungskennwerte des sich in einer Einparkposition befindenden Fahrzeugs bestimmt ist, und an der eine Lenkrichtung eines lenkbaren Rades (FL, FR) des Fahrzeugs während einer Bewegung des Fahrzeugs aus der Anfangposition in die Einparkposition umgekehrt wird; und
eine Bogenbahnberechnungseinrichtung (10, 102, 120), zum Berechnen einer bogenförmigen Bewegungsbahn (A₁-C₁) des axialen Mittelpunkts (A) einer mit zwei Rädern (RL, RR) des Fahrzeugs verbundenen Achse, die zu nehmen ist, wenn das Fahrzeug (50) mit einem kleinsten Radius (Rₘᵢₙ) zum Drehen des Fahrzeugs gedreht wird;
**gekennzeichnet durch** ein weiteres Aufweisen von
einer Berührungspunktberechnungseinrichtung (10, 104, 122) zum Berechnen der vorbestimmten Position, die ein Berührungspunkt (C₁) zwischen der von der Bogenbahnberechnungseinrichtung berechneten bogenförmigen Bewegungsbahn (A₁-C₁) des axialen Mittelpunkts (A) der mit den zwei Rädern (RL, RR) des Fahrzeugs verbundenen Achse und einer geraden Linie ist, die eine Position (B, B₁) von einem der beiden Räder durchläuft, wobei
die Bogenbahnberechnungseinrichtung (10, 120) auf eine Anfangseinstellung des Fahrzeug ein park assistenz systems hin betriebsfähig ist; und
die Berührungspunktberechungseinrichtung (10, 122) auf die Anfangseinstellung hin betriebsfähig ist und den Berührungspunkt (C) berechnet, dass der Berührungspunkt bezüglich dem Körper des Fahrzeugs definiert ist.

2. Fahrzeugeinparkassistenzsystem nach Anspruch 1, wobei
die Bogenbahnberechnungseinrichtung (10, 102) bei einer Erfassung einer Anforderung zum Einparken des Fahrzeugs in den gewünschten Einparkbereich in Funktion tritt und die bogenförmige Bewegungsbahn (A₁-C₁) berechnet, welche zu nehmen ist, wenn das Fahrzeug (50) aus der Einparkposition gedreht wird;
die Berührungspunktberechnungseinrichtung (10, 104) bei einer Erfassung dieser Anforderung in Funktion tritt; und
die Bewegungsbahnbestimmungseinrichtung (10, 106) die gewünschte Bewegungsbahn (A₀-C₁) des axialen Mittelpunkts (A) einer mit zwei Rädern (RL, RR) des Fahrzeugs verbundenen Achse bestimmt, so dass die gewünschte Bewegungsbahn den Berührungspunkt (C₁) als einen Wendepunkt durchläuft, an dem die Lenkrichtung während der Bewegung des Fahrzeugs aus der Anfangsposition zu der Einparkposition umgekehrt wird.

3. Fahrzeugeinparkassistenzsystem nach Anspruch 1, wobei
die Bewegungsbahnbestimmungseinrichtung (10, 140) bei einer Erfassung einer Anforderung zum Einparken des Fahrzeugs in den gewünschten Einparkbereich in Funktion tritt und um auf der Basis des von der Berührungspunktberechnungseinrichtung berechneten Berührungspunkts (C) einen Wendepunkt (C) zu erhalten, an dem die Lenkrichtung auf der Bewegungsbahn des Fahrzeugs von der Ausgangsposition zu der Einparkposition umgekehrt wird, und wobei die Bewegungsbahnbestimmungseinrichtung die gewünschte Bewegungsbahn des axialen Mittelpunkts (A) einer mit zwei Rädern (RL, RR) des Fahrzeugs verbundenen Achse bestimmt, so dass die gewünschte Bewegungsbahn den Wendepunkt durchläuft.

4. Fahrzeugeinparkassistenzsystem nach Anspruch 1, 2 oder 3, wobei
die Achse eine Hinterachse ist, die mit zwei Hinterrädern (RL, RR) des Fahrzeugs verbunden ist, und wobei sich das eine der zwei Hinterrädern auf einer Seite des Fahrzeugs befindet, die der anderen Seite gegenüber liegt, welche zu einer Lenkrichtung der Vorderräder (FL, FR) des Fahrzeugs zum Drehen des Fahrzeugs mit dem kleinsten Radius korrespondiert, um die bogenförmige Bewegungsbahn des ersten ausgewählten Abschnitts (A) zu erhalten.

5. Fahrzeugeinparkassistenzsystem nach Anspruch 1, wobei die Bewegungsbahnbestimmungseinrichtung (10, 106, 140) betriebsfähig ist, um einen kreisförmigen Bogen als die gewünschte Bahn einer Anfangsbewegung des ersten ausgewählten Abschnitts (A) des Fahrzeugs von der Anfangsposition zu der bestimmten Position (C₁) zu bestimmen, der die Anfangsposition (A₀) und die bestimmte Position (C₁) durchläuft, auf der Basis einer positionellen Beziehung zwischen der Anfangsposition und der bestimmten Position.

6. Fahrzeugeinparkassistenzsystem nach Anspruch 1, ferner mit:
einer Bilderlangungseinrichtung (20), die an einem hinteren Abschnitt des Fahrzeugs (50) angeordnet ist und betriebsfähig ist, um Bilddaten zu erhalten, die repräsentativ für eine Rückansicht von dem Fahrzeug aus in eine rückwärtig gerichtete Richtung sind, und
eine Anzeigeeinrichtung (22), die betriebsfähig ist, um die Rückansicht und die gewünschte Bewegungsbahn des axialen Mittelpunkts (A) einer mit zwei Rädern (RL, RR) des Fahrzeugs verbundenen Achse anzuzeigen, die durch die Bewegungsbahnbestimmungseinrichtung bestimmt ist, so dass die gewünschte Bewegungsbahn über die Rückansicht gelegt ist.

7. Fahrzeugeinparkassistenzsystem nach Anspruch 1, ferner mit:
einer Klangerzeugungseinrichtung (24), die in Funktion tritt, wenn sich der axiale Mittelpunkt (A) einer mit zwei Rädern (RL, RR) des Fahrzeugs verbundenen Achse in eine Position nahe der vorbestimmten Position während der Bewegung des Fahrzeugs von der Anfangsposition zu der Einparkposition bewegt hat, wobei die Klangerzeugungseinrichtung eine hörbare Ausgabe zur Information für einen Fahrer des Fahrzeugs erzeugt, dass sich der axiale Mittelpunkt (A) der mit zwei Rädern (RL, RR) des Fahrzeugs verbundenen Achse an eine Position nahe der bestimmten Position bewegt hat.

## Revendications

1. Système d'assistance pour garer un véhicule pour aider le conducteur d'un véhicule (50) lors du parcage du véhicule dans un emplacement de stationnement souhaité par un déplacement du véhicule depuis une position initiale, comprenant :
des moyens de détermination de chemin de déplacement (10, 106, 140) pouvant fonctionner pour déterminer un chemin de déplacement souhaité d'un point axialement intermédiaire (A) d'un axe connecté aux deux roues (RL, RR) dudit véhicule depuis ladite position initiale (A₀) vers ladite aire de stationnement souhaitée, de telle manière que ledit chemin de déplacement passe par une position prédéterminée (C₁) qui est déterminée par les caractéristiques de braquage dudit véhicule situé en une position de stationnement, et dans lequel une direction de braquage d'une roue directrice (FL, FR) du véhicule est inversée pendant un mouvement dudit véhicule de ladite position initiale vers ladite position de stationnement ; et
des moyens de calcul de chemin courbe (10, 102, 120) pour calculer un chemin courbe de déplacement (A₁-C₁) du point axialement intermédiaire (A) d'un axe connecté aux deux roues (RL, RR) du véhicule qui doit être pris quand le véhicule (50) est tourné avec un rayon le plus petit (Rₘᵢₙ) de virage du véhicule ; **caractérisé en ce qu'**il comprend en outre des moyens de calcul de point de tangence (10, 104, 122) pour calculer la position prédéterminée qui est un point de tangence (C₁) entre le chemin courbe de déplacement (A₁-C₁) du point axialement intermédiaire (A) de l'axe connecté aux deux roues du véhicule calculé par les moyens de calcul de chemin courbe et une ligne droite qui passe par une position (B, B1) de l'une des deux roues, dans lequel
les moyens de calcul de chemin courbe (10, 120) peuvent fonctionner lors du réglage initial du système d'assistance pour garer un véhicule ; et
les moyens de calcul de point de tangence (10, 122) peuvent fonctionner lors dudit réglage initial, et calculent le point de tangence (C), de telle manière que ledit point de tangence est défini par rapport à ladite carrosserie du véhicule.

2. Système d'assistance pour garer un véhicule selon la revendication 1, dans lequel
les moyens de calcul de chemin courbe (10, 102) peuvent fonctionner lors de la détection d'une demande pour le parcage du véhicule dans ladite aire de stationnement souhaitée, et calculent le chemin courbe de déplacement (A₁-C₁) qui doit être pris quand le véhicule (50) est tourné depuis ladite position de stationnement ;
les moyens de calcul de point de tangence (10, 104,) peuvent fonctionner lors de la détection de ladite demande ; et
lesdits moyens de détermination de chemin de déplacement (10, 106) déterminent ledit chemin de déplacement souhaité (A₀-C₁) du point axialement intermédiaire (A) d'un axe connecté aux deux roues (RL, RR) dudit véhicule de telle manière que ledit chemin souhaité de déplacement passe par ledit point de tangence (C₁) comme un point de changement auquel ladite direction de braquage est inversée pendant ledit déplacement du véhicule depuis ladite position initiale vers ladite position de stationnement.

3. Système d'assistance pour garer un véhicule selon la revendication 1, dans lequel
lesdits moyens de détermination de chemin de déplacement (10, 140) peuvent fonctionner lors de la détection d'une demande de parcage du véhicule dans ladite aire de stationnement souhaitée, et sur la base dudit point de tangence (C) calculé par lesdits moyens de calcul de point de tangence, pour obtenir un point de changement (C) auquel ladite direction de rotation est inversée sur ledit chemin de déplacement du véhicule depuis ladite position initiale vers ladite position de stationnement, et lesdits moyens de détermination de chemin de déplacement déterminent ledit chemin de déplacement souhaité du point axialement intermédiaire (A) d'un axe connecté aux deux roues (RL, RR) dudit véhicule de telle manière que ledit chemin de déplacement passe par ledit point de changement.

4. Système d'assistance pour garer un véhicule selon les revendications 1, 2 ou 3 dans lequel
ledit axe est un axe arrière connecté aux deux roues (RL, RR) arrière du véhicule, et ladite une desdites deux roues arrière est située sur un côté du véhicule qui est opposé à l'autre côté qui correspond à une direction de braquage des roues avant (FL, FR) du véhicule pour tourner le véhicule avec ledit plus petit rayon pour obtenir ledit chemin courbe de déplacement de ladite première partie sélectionnée (A).

5. Système d'assistance pour garer un véhicule selon la revendication 1, dans lequel
lesdits moyens de détermination de chemin de déplacement (10, 106, 140) peuvent fonctionner pour déterminer, comme ledit chemin souhaité de déplacement initial de ladite première partie sélectionnée (A) du véhicule depuis ladite position initiale vers ladite position prédéterminée (C₁), un arc circulaire passant par ladite position initiale (A₀) et ladite position prédéterminée (C₁), sur la base d'une relation positionnelle entre ladite position initiale et ladite position prédéterminée.

6. Système d'assistance pour garer un véhicule selon la revendication 1, comprenant en outre :
des moyens d'obtention d'image (20) disposés sur une partie arrière du véhicule (50) et pouvant fonctionner pour obtenir des données d'image représentatives d'une vue arrière prise depuis le véhicule dans une direction vers l'arrière ; et
des moyens d'affichage (22) pouvant fonctionner pour afficher ladite vue arrière et ledit chemin de déplacement souhaité dudit point axialement intermédiaire (A) d'un axe connecté aux deux roues (RL, RR) du véhicule déterminé par lesdits moyens de détermination de chemin de déplacement, de telle manière que ladite chemin de déplacement souhaité est superposé sur ladite vue arrière.

7. Système d'assistance pour garer un véhicule selon la revendication 1, comprenant en outre
des moyens de génération de sons (24) pouvant fonctionner quand ledit point axialement intermédiaire (A) d'un axe connecté aux deux roues (RL, RR) du véhicule (50) s'est déplacé vers une position proche de ladite position prédéterminée pendant le déplacement du véhicule depuis ladite position initiale vers ladite position de stationnement, lesdits moyens de génération de sons générant une sortie audible pour informer un opérateur du véhicule que ledit point axialement intermédiaire (A) d'un axe connecté aux deux roues (RL, RR) du véhicule (50) s'est déplacé dans ladite position proche de ladite position prédéterminée.
